# EUROPÄISCHE PATENTSCHRIFT

(11) **EP 2 351 669 B1**
(45) Veröffentlichungstag und Bekanntmachung des Hinweises auf die Patenterteilung: **10.12.2014**
(21) Anmeldenummer: 11003406.3
(22) Anmeldetag: 05.08.2010
(51) Int. Cl.: B60R 16/023

(54) **Fahrzeug und Verfahren zum Betreiben eines abgestellten Fahrzeugs mit unbeaufsichteten Kindern oder Tiere**
Vehicle and method for operating a parked vehicle with unattended children or animals
Véhicule et procédé de fonctionnement d'un véhicule déposé avec des enfants ou animaux non surveillés.

(30) Priorität: 07.08.2009 DE 102009036488
(43) Veröffentlichungstag der Anmeldung: 03.08.2011
(62) Teilanmeldung aus: 10008155.3
(73) Patentinhaber: Audi AG, 85045 Ingolstadt (DE)
(72) Erfinder: Freyer, Jörn, Dr., 81827 München (DE); Brenneis, Oliver, 85748 Garching (DE); Hantschke, Christopher, 85080 Gaimersheim (DE); Kastl, Andreas, 85092 Köshing (DE); Stadel, Benjamin, 85051 Ingolstadt (DE); Ullmann, Stefan, 80797 München (DE); Schindler, Andreas, 85055 Ingolstadt (DE)
(74) Vertreter: Thielmann, Frank

(56) Entgegenhaltungen:
- US-A- 5 949 340
- US-A1- 2002 080 014
- US-A1- 2002 161 501
- US-A1- 2004 113 797
- US-A1- 2005 030 188
- US-A1- 2007 057 780

## Beschreibung

Die Erfindung betrifft ein Verfahren zum Betreiben eines abgestellten Fahrzeugs sowie ein Fahrzeug mit einer Erfassungseinrichtung zum Erfassen mindestens einer Größe in dem Fahrzeug und mit Mitteln zum Ausführen mindestens einer Aktion, wobei die Erfassungseinrichtung und die Mittel zum Ausführen in einem abgestellten Zustand des Fahrzeugs betreibbar sind. Mit einem Inneren eines Fahrzeugs ist dabei ein Raum gemeint, der zur Beförderung von Lebewesen, insbesondere Personen, ausgelegt ist. Bevorzugt wird die Größe in einer Fahrgastzelle erfasst. Es kann sich aber neben der Fahrgastzelle z.B. auch um einen Kofferraum, einen Laderaum oder eine Ladepritsche handeln.

Nach einer Fahrt z.B. mit einem Personenkraftwagen kann es vorkommen, dass ein mitreisendes Kind eingeschlafen ist und daher nicht allein den parkenden Wagen verlassen kann. Andere mitreisende Personen können dann versuchen, das Kind aus dem Wagen zu heben, um es mit sich zu tragen. Das kann allerdings zu einem Sturz des Kindes führen, weil insbesondere bei einem Personenkraftwagen die Fahrgastzelle oftmals sehr eng ist und es daher schwierig ist, ein Kind beim Herausheben sicher zu halten. Auch wenn es zu keinem Sturz kommt, kann das Kind beim Herausheben zumindest in seinem Schlaf gestört werden und zu weinen anfangen. Ein schlafendes Kind einfach in dem parkenden Wagen zurückzulassen, bis es aufgewacht, wäre heutzutage ebenfalls bedenklich, weil das Kind, nachdem es aufgewacht ist, nicht allein aus dem Fahrzeug aussteigen soll. Bei einem Kleinkind besteht zudem die Gefahr, dass es sich sogar dann nicht selbst helfen könnte, wenn es beispielsweise im Winter allein in dem parkenden Wagen zurückgeblieben wäre und die Temperatur in der Fahrgastzelle auf einen für seine Gesundheit gefährlich niedrigen Wert absinken würde.

Auch das Mitführen von Tieren in einem Fahrzeug kann beim Abstellen des Fahrzeugs zu einem Unfall führen. Wenn nach dem Parken eine Tür geöffnet wird und das Tier aus dem Fahrzeug springt, besteht z.B. das Risiko, dass das Tier dabei vor ein anderes, vorbeifahrendes Fahrzeug springt, weil es nicht die nötige Übersicht über die Gefahren im Verkehr hat. Die Wahrscheinlichkeit eines solchen Unfalls erhöht sich dabei insbesondere dann, wenn ein Fahrer mit dem Tier das Fahrzeug z.B. während einer Einkaufsfahrt mehrmals parken und verlassen muss.

Die US 2002/161501 A1 beschreibt ein Sicherheitssystem für ein Fahrzeug, welches im Fahrzeug eingeschlossene Lebewesen davor bewahrt, infolge der Hitze im Fahrzeuginnenraum umzukommen. Zu diesem Zweck werden die Sitzbelegung und die Temperatur im Inneren des Fahrzeugs ermittelt und in deren Abhängigkeit werden Warnsignale im Fahrzeuginnenraum und außerhalb des Fahrzeugs erzeugt. Ebenso werden Systeme aktiviert, welche die Wärme im Fahrzeuginnenraum dadurch verringern, dass beispielsweise die Fenster geöffnet werden oder die Klimaanlage aktiviert wird.

Aus der US 2004/113797 A1 ist ein Verfahren als bekannt zu entnehmen, bei dem die Anwesenheit eines Fahrzeuginsassen, die Temperatur im Innenraum des Fahrzeugs und der Betriebszustand des Motors erfasst werden. Falls sich ein Fahrzeuginsasse nach dem Abstellen im Innenraum des Fahrzeugs befindet, der Motor des Fahrzeugs ausgeschaltet ist und die Temperatur im Innenraum des Fahrzeugs einen Grenzwert überschreitet, wird der Fahrzeugführer oder andere Personen alarmiert.

Des Weiteren beschreibt die US 2002/080014 A1 ein Belegungserkennungssystem für ein Kraftfahrzeug. Das Belegungserkennungssystem ist dazu ausgelegt, eine Anwesenheit einer Person oder eines Tieres in einem Fahrzeugraum, wie einem Kraftfahrzeuginnenraum oder einem Kofferraum, anhand einer Änderung eines elektrischen Feldes in dem Fahrzeugraum zu erfassen. Wenn die Temperatur in Fahrzeugraum hoch ist und eine Person in dem Fahrzeugraum anwesend ist, kann beispielsweise eine Kommunikationsverbindung aufgebaut werden.

Es ist Aufgabe der vorliegenden Erfindung, bei einem Fahrzeug nach einem Parken desselben einen Umgang mit hilfsbedürftigen Lebewesen zu erleichtern.

Die Aufgabe wird durch ein Verfahren zum Betreiben eines Fahrzeugs gemäß Patentanspruch 1 gelöst. Eine weitere Lösung der Aufgabe ist durch ein Fahrzeug gemäß Patentanspruch 13 gegeben. Vorteilhafte Weiterbildungen des erfindungsgemäßen Verfahrens sind durch die Unteransprüche gegeben.

Das erfindungsgemäße Verfahren betrifft ein Fahrzeug, in dem nach einem Abstellen des Fahrzeugs mindestens ein Lebewesen verblieben ist. Unter einem Abstellen eines Fahrzeugs ist hierbei insbesondere zu verstehen, dass das Fahrzeug geparkt ist und von zur Bedienung des Fahrzeugs fähigen Personen verlassen wurde. Das erfindungsgemäße Verfahren umfasst einen Schritt des Erfassens mindestens einer Größe in dem Fahrzeug mittels einer Erfassungseinrichtung, wobei die Größe mit mindestens einem Merkmal des mindestens eine Lebewesens korreliert ist. In dem oben genannten, das eingeschlafene Kind betreffenden Beispiel kann ein solches Merkmal dessen äußeres Erscheinungsbild oder der Wachzustand des Kindes sein. Bei dem Beispiel mit dem Tier können es z.B. dessen Lautäußerungen sein. Bei den erfassten Größen kann es sich entsprechend um Video- oder Mikrofonsignale handeln, deren Verlauf natürlich durch das äußere Erscheinungsbild des Kindes bzw. z.B. durch ein Bellen eines Hundes beeinflusst wird.

Das erfindungsgemäße Verfahren umfasst des Weiteren einen Schritt des Ausführens mindestens einer Aktion in Abhängigkeit von der erfassten Größe. Durch das erfindungsgemäße Verfahren ergibt sich somit der Vorteil, dass ein Lebewesen in dem Fahrzeug zurückgelassen werden kann und dabei eine Möglichkeit eines Überwachens des Lebewesens gegeben ist, um das Lebewesen immer dann unterstützen zu können, wenn es die Unterstützung benötigt.

Erfindungsgemäß wird es ermöglicht, dass eine Information über das mindestens eine Merkmal des Lebewesens einer Person außerhalb des Fahrzeugs zugänglich gemacht wird. Dadurch ergibt sich der Vorteil, dass sich die Person von dem Fahrzeug entfernen kann und dennoch über das Befinden des Lebewesens in dem Fahrzeug informiert bleibt.

Im Bezug auf das Bereitstellen der Repräsentation ist es erfindungsgemäß vorgesehen, dass das Bereitstellen die folgenden beiden Schritte umfasst: Es wird zunächst eine Kommunikationsverbindung mit einer Sende- und Empfangseinheit des Fahrzeugs von außerhalb des Fahrzeugs aufgebaut und anschließend die Repräsentation über die Kommunikationsverbindung übertragen. Mit anderen Worten wird es gemäß dieser Ausführungsform ermöglicht, eine Information über das Lebewesen in der Fahrgastzelle von außerhalb des Fahrzeugs gezielt abzurufen. Dadurch ergibt sich der Vorteil, dass die Person außerhalb des Fahrzeugs sich immer dann über das Merkmal informieren kann, wenn sie es wünscht.

Zudem wird eine Kommunikationsverbindung zu einem Gerät außerhalb des Fahrzeugs aufgebaut. Dadurch kann sich in vorteilhafter Weise eine Person außerhalb des Fahrzeug einen Eindruck davon verschaffen, wie es dem Lebewesen geht. Die Kommunikationsverbindung ist bidirektional, d. h., es ist auch möglich, ein Bild- oder Tonsignal von der Person außerhalb des Fahrzeugs zu dem Lebewesen in der Fahrgastzelle hin zu übertragen und dort wiederzugeben. Dadurch wird es in vorteilhafter Weise der Person außerhalb des Fahrzeugs ermöglicht, das Lebewesen im Fahrzeug zu beruhigen oder diesem Anweisungen zu erteilen.

Die Erfindung umfasst entsprechend auch ein Fahrzeug, das eine Erfassungseinrichtung zum Erfassen mindestens einer Größe in dem Fahrzeug und Mittel zum Ausführen mindestens einer Aktion aufweist. Die Erfassungseinrichtung und die Mittel zum Ausführen sind dabei in einem abgestellten Zustand des Fahrzeugs betreibbar. Bei der mindestens einen Größe handelt es sich um eine Größe, die bei einem in dem Fahrzeug befindlichen Lebewesen mit mindestens einem Merkmal dieses Lebewesens korreliert ist. Des Weiteren sind die Mittel zum Ausführen dazu ausgelegt, die mindestens eine Aktion in Abhängigkeit von der erfassten Größe auszuführen. Die Aktion umfasst dabei die Schritte, wie sie bereits im Zusammenhang mit dem erfindungsgemäßen Verfahren beschrieben wurden. Das erfindungsgemäße Fahrzeug weist den Vorteil auf, dass in dem Fahrzeug ein Lebewesen zurückgelassen werden kann und z.B. gemäß dem erfindungsgemäßen Verfahren eine Überwachung dieses Lebewesens ermöglicht werden kann, um bei Bedarf ein Unterstützen des Lebewesens zu ermöglichen.

Das erfindungsgemäße Verfahren wird in vorteilhafter Weise weitergebildet, wenn als Größe ein Bildsignal einer Kamera erfasst wird, durch welche mindestens ein Bild von dem Lebewesen bereitgestellt wird. Das beobachtete Merkmal des Lebewesens ist in diesem Fall dann entsprechend dessen äußeres Erscheinungsbild im Bereich des sichtbaren Lichts und/oder im Bereich des infraroten Lichts. Eine Kamera umfasst im Rahmen der Erfindung auch eine Vorrichtung, mittels welcher ein Bereich im Fahrzeug optisch z.B. mit einem Laserstrahl oder einem Infrarot-Laserstrahl abgetastet wird oder mittels eines Ultraschallsignals akustisch abgetastet wird. Anhand des äußeren Erscheinungsbilds eines Lebewesens lässt sich in vorteilhafter Weise eine große Anzahl von Zuständen desselben automatisch oder durch einen Betrachter einfach ermitteln.

In einer weiteren Ausführungsform des erfindungsgemäßen Verfahrens wird als Größe ein Audiosignal aus dem Fahrzeug erfasst. Dabei wird das Audiosignal bevorzugt in der Weise erfasst, dass Lautmitteilungen des Lebewesens zuverlässig miterfasst werden. Bevorzugt wird dazu das Signal in einem Bereich einer Rückbank des Fahrzeugs, insbesondere in der Nähe von oder an einen Kindersitz, erfasst. Entsprechend den Gegebenheiten in einem Fahrzeug wird das Audiosignal erfindungsgemäß aber auch in einem Bereich eines Beifahrersitzes erfasst.

Im Zusammenhang mit Tieren, die in dem Fahrzeug zurückgelassen werden sollen, kann beispielsweise auch vorgesehen sein, die Bildsignale oder die Audiosignale in einem Kofferraum oder im Bereich einer Ladefläche zu erfassen.

Durch Erfassen eines Audiosignals aus dem Fahrzeug ergibt sich der Vorteil, dass eine Änderung eines Zustands des Lebewesens mit einfachen technischen Mitteln durch Überwachen beispielsweise eines Lautstärkepegels in dem Fahrzeug ermittelbar ist. Überwachte Merkmale sind bei dieser Ausführungsform also die Lautäußerungen des Lebewesens. Insbesondere in dem Fall, dass es sich bei dem Lebewesen um eine Person handelt, ist zudem in vorteilhafter Weise eine Kommunikation zwischen dem Lebewesen und solchen Personen möglich, die sich außerhalb des Fahrzeugs befinden.

In einer weiteren Ausführungsform des erfindungsgemäßen Verfahrens wird als Größe ein Signal eines Geräts zum Überwachen einer Körperfunktion des mindestens Lebewesens erfasst. Dadurch ergibt sich der Vorteil, dass unmittelbar auf einen inneren Zustand des Lebewesens geschlossen werden kann. Bevorzug wird ein Puls, d.h. eine Pulsrate und/oder eine Regelmäßigkeit des Pulses, als ein Merkmal erfasst, anhand dessen unmittelbar auf einen inneren Zustand des Lebewesens geschlossen werden kann. Weitere Möglichkeiten, eine Körperfunktion des Lebewesens zu überprüfen, sind beispielsweise: Messen der Hautleitfähigkeit, Erfassen einer Bewegung der Augen des Lebewesens, Messen eines Leitwerts der Haut des Lebewesens, Messen einer Körpertemperatur, Ermitteln einer Sättigung des Blutes des Lebewesens mit Sauerstoff oder Ermitteln, in welchem Maße das Lebewesen schwitzt.

Bevorzugt wird als Größe ein Signal eines Temperatursensors erfasst, der eine Temperatur in dem Fahrzeug erfasst. Mittels dieser Größe kann in vorteilhafter Weise auf ein Wohlbefinden des Lebewesens rückgeschlossen werden, ohne dass dazu aufwendige Messungen an dem Lebewesen selbst nötig sind.

Eine andere vorteilhafte Weiterbildung des erfindungsgemäßen Verfahrens besteht darin, dass als Größe ein Signal einer Einrichtung zum Erkennen, ob ein Fahrzeugsitz besetzt ist, erfasst wird. Mit einer solchen Einrichtung kann in vorteilhafter Weise erkannt werden, ob sich das Lebewesen zu einem fraglichen Zeitpunkt noch im Fahrzeug aufhält. Eine besonders günstige Variante dieser Ausführungsform des Verfahrens kann dabei bereitgestellt werden, wenn in das Fahrzeug bereits eine Einrichtung eingebaut ist, mit der während einer Fahrt erkennbar ist, ob sich ein nicht angeschnallter Passagier an Bord befindet. Eine solche Einrichtung ist prinzipiell bekannt und kann bei dem erfindungsgemäßen Verfahren entsprechend genutzt werden. Bevorzugt werden mit einer solchen Einrichtung als Merkmal des Lebewesens dessen Bewegungen ermittelt. Insbesondere wird dabei ein Grad der Bewegung ermittelt, also ein Maß dafür, wie unruhig das Lebewesen ist. Dadurch ist in vorteilhafter Weise erkennbar, ob das Lebewesen schläft oder wach ist. Zum Erfassen der Bewegungen ist es natürlich auch möglich, einen Bewegungssensor vorzusehen.

Gemäß einer weiteren Ausführungsform der Erfindung ergibt sich ein Vorteil, wenn die mindestens eine Größe mittels einer Alarmanlage und/oder einer Crashsensorik erfasst wird, durch welche das Innere des Fahrzeugs überwachbar ist. Durch Nutzen von Sensoren einer zum Überwachen des Fahrzeugs installierten Alarmanlage kann das Verfahren in vorteilhafter Weise durchgeführt werden, ohne dass zusätzliche Sensoren zum Erfassen einer Größe bereitgestellt werden müssen. Gleiches gilt für eine Crashsensorik, durch welche beispielsweise eine Position einer Person in einem Fahrzeugsitz ermittelbar ist.

In Bezug auf das Ausführen mindestens einer Aktion wird bei einer weiteren Ausführungsform des erfindungsgemäßen Verfahrens überprüft, ob die erfasste Größe in einem Sollbereich liegt, und falls die erfasste Größe außerhalb des Sollbereichs liegt, von den folgenden Maßnahmen eine einzelne oder mehrere in Kombination durchgeführt.

Eine der Maßnahmen besteht darin, eine Videoaufzeichnung darzustellen. Daraus ergibt sich der Vorteil, dass dem Lebewesen, insbesondere einem Kind, eine Ablenkung oder ein vertrauter Anblick präsentiert werden kann, wenn ein durch den Sollbereich festgelegtes Kriterium nicht mehr erfüllt ist. So ist es möglich, einem Kind einen Film zu präsentieren, wenn es aufgewacht ist und darauf wartet, von seiner Mutter aus dem Fahrzeug geholt zu werden.

Eine weitere Maßnahme besteht in dem Abspielen eines Audiosignals. Dies kann ebenfalls in vorteilhafter Weise einen beruhigenden Effekt auf das Lebewesen haben. In einer anderen Weiterbildung des erfindungsgemäßen Verfahrens ist das Audiosignal ein Warnsignal, das abgespielt wird, wenn durch Vergleichen der erfassten Größe mit dem Sollbereich festgestellt wird, dass sich das Lebewesen in Gefahr befindet. So lässt sich das Lebewesen z.B. vor einer Erstickungsgefahr warnen.

Als weitere Maßnahme kann auch eine Sitzmassage aktiviert werden. Dies kann in vorteilhafter Weise ebenfalls zur Beruhigung eines Lebewesens, insbesondere einer Person, beitragen.

Eine weitere Maßnahme besteht darin, ein Schiebedach oder eine andere Luke bzw. Klappe des Fahrzeugs zu öffnen. Dadurch wird es möglich, heiße, in dem Fahrzeug aufgestaute Luft aus diesem entweichen zu lassen, wenn das Fahrzeug beispielsweise in der prallen Sonne geparkt ist und die Temperatur in dem Fahrzeug einen für das Wohlbefinden oder die Gesundheit des Lebewesens kritischen Wert übersteigt. Eine andere Maßnahme besteht darin, ein Rollo zu verfahren. Dadurch kann dem Lebewesen Schatten gespendet werden, wenn erkannt wird, dass einfallendes Sonnenlicht das Wohlbefinden des Lebewesens beeinträchtigt. Als eine andere Maßnahme kann eine Klimatisierung aktiviert werden. Dies ergibt den Vorteil, dass der Komfort des Lebewesens gewahrt bleibt.

Eine weitere vorteilhafte Maßnahme besteht in einem Entriegeln einer Zentralverriegelung. Dadurch wird es in vorteilhafter Weise Personen außerhalb des Fahrzeugs ermöglicht, sich in einem Notfall Zugang zum Fahrzeuginneren zu verschaffen. Eine weitere vorteilhafte Maßnahme besteht darin, ein von außerhalb des Fahrzeugs wahrnehmbares Warnsignal zu erzeugen. Bevorzugt werden dabei Warnblinker, Scheinwerfer, eine Fahrzeughupe oder ein Signalgeber einer Alarmanlage aktiviert. So können in vorteilhafter Weise Personen außerhalb des Fahrzeugs auf das Fahrzeug aufmerksam gemacht werden, wenn anhand der erfassten Größe erkannt wird, dass das Lebewesen in dem Fahrzeug in Gefahr ist.

Bei einer weiteren vorteilhaften Ausführungsform des erfindungsgemäßen Verfahrens umfasst das Ausführen mindestens einer Aktion ein Verarbeiten der mindestens einen erfassten Größe zum Übertragen einer Repräsentation des mindestens einen Merkmals außerhalb des Fahrzeugs und ein Bereitstellen der Repräsentation an eine Person außerhalb des Fahrzeugs. Eine Repräsentation eines Merkmals kann hierbei die entsprechende, erfasste Größe selbst umfassen, wobei die erfasste Größe in eine Form gebracht wird, in der sie an ein Empfangsgerät außerhalb des Fahrzeugs übertragbar ist. Eine Repräsentation kann aber auch eine verarbeitete Variante der erfassten Größe sein, durch welche das Merkmal in kompakterer Form repräsentiert werden kann, als es mittels der erfassten Größe selbst möglich ist. In dem einleitend genannten Beispiel wäre eine solche Repräsentation z.B. bereits durch eine Variable gegeben, deren Wert lediglich angibt, ob das Kind schläft oder wach ist.

Bei einer Weiterbildung dieser Ausführungsform des erfindungsgemäßen Verfahrens wird ein Grad einer Bewegung des Lebewesens ermittelt und das mindestens eine Merkmal durch den ermittelten Grad repräsentiert. So wird es in vorteilhafter Weise möglich, z.B. als Merkmal des Lebewesens einen Wachzustand zu überwachen, indem der Person außerhalb des Fahrzeugs angezeigt wird, wie ausgeprägt die Bewegungen des Lebewesens in dem Fahrzeug sind.

Eine vorteilhafte Weiterbildung ergibt sich, wenn die erfasste Größe einem Zustand zugeordnet wird und das mindestens eine Merkmal durch ein Ergebnis der Zuordnung repräsentiert wird. Dadurch ergibt sich der Vorteil, dass der Person außerhalb des Fahrzeugs in sehr kompakter Form mitgeteilt wird, ob das Lebewesen Unterstützung braucht. Bevorzugt wird die erfasste Größe dabei einem Schlaf- oder Wachzustand zugeordnet. Wird ein schlafendes Lebewesen in dem Fahrzeug zurückgelassen, ergibt sich dadurch der Vorteil, dass die Person außerhalb des Fahrzeugs schnell darüber informiert werden kann, wenn das Lebewesen erwacht. In vergleichbarer Weise können als Zustände z. B. auch verschiedene Grade eines Wohlbefindens eines Lebewesens festgelegt werden.

Bevorzugt wird die Repräsentation akustisch und/oder optisch wiedergegeben. Dadurch ist sie von einer Person in vorteilhafter Weise sehr leicht wahrzunehmen.

In einer weiteren vorteilhaften Ausführungsform umfasst der Schritt des Bereitstellens der Repräsentation ein Überprüfen ob die Repräsentation ein vorbestimmtes Kriterium erfüllt, und, falls die Repräsentation das vorbestimmte Kriterium erfüllt, wird in einem weiteren Schritt eine Kommunikationsverbindung mit einem Empfangsgerät des Benutzers vom Fahrzeug aus aufgebaut und die erfasste Größe und/oder die Repräsentation über die Kommunikationsverbindung übertragen. Dadurch ergibt sich der Vorteil, dass die Person automatisch über den Zustand des Lebewesens in dem Fahrzeug informiert wird, wenn das vorbestimmte Kriterium erfüllt ist.

Die in Bezug auf das erfindungsgemäße Verfahren beschriebenen Weiterbildungen lassen sich selbstverständlich entsprechend auf das erfindungsgemäße Fahrzeug übertragen.

Weitere Merkmale der Erfindung ergeben sich im Folgenden außerdem aus den Figuren und der Figurenbeschreibung.

Im Folgenden wird die Erfindung anhand eines Ausführungsbeispiels näher erläutert. Dazu zeigen:
- Fig. 1: eine schematische Darstellung einer Fahrgastzelle einer Ausführungsform eines erfindungsgemäßen Fahrzeugs, wobei sich in der Fahrgastzelle ein schlafendes Kind befindet und das Kind mittels einer Ausführungsform des erfindungsgemäßen Verfahrens von außerhalb des Fahrzeugs überwacht wird; und
- Fig. 2: eine schematische Darstellung einer Ausführungsform eines erfindungsgemäßen Fahrzeugs, in dem sich ein Hund befindet, wobei das Fahrzeug geparkt ist und der Besitzer des Hundes sich außerhalb des Fahrzeugs aufhält.

Die Beispiele stellen bevorzugte Ausführungsformen der Erfindung dar.

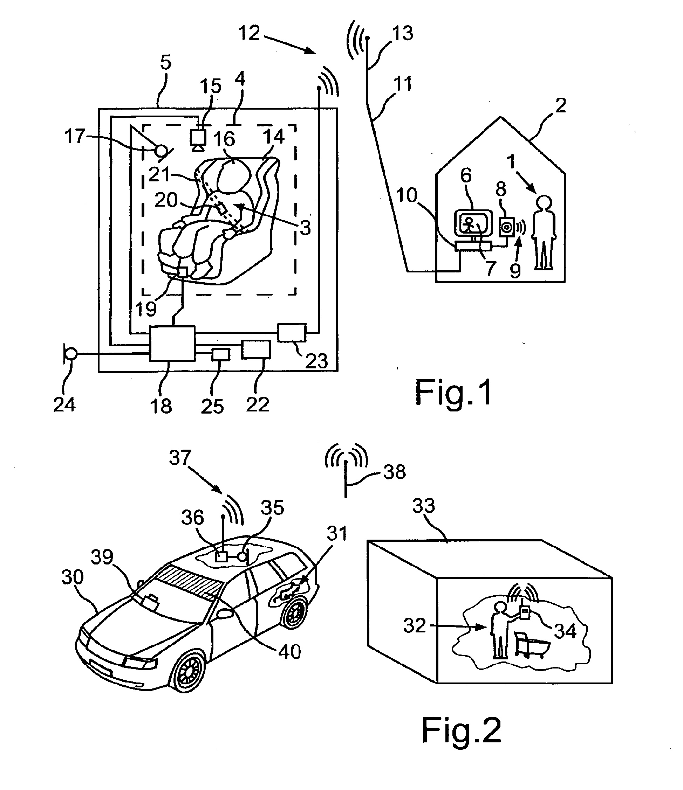

In Fig. 1 ist in schematischer Darstellung gezeigt, wie eine Mutter 1 von einem Haus 2 aus ihr Kind 3 überwacht, dass sie in einer Fahrgastzelle 4 ihres Fahrzeugs 5 zurückgelassen hat. Das Kind 3 ist während einer Fahrt mit dem Fahrzeug 5 eingeschlafen und soll nach dem Wunsch der Mutter 1 erst aus dem Fahrzeug 5 geholt werden, wenn es aufgewacht ist. Das Fahrzeug 5 ist vor dem Haus 2 geparkt und mittels einer in Fig. 1 nicht dargestellten Zentralverriegelung verriegelt. Außer dem Kind 3 befindet sich niemand in dem Fahrzeug 5.

Um das Kind 3 während seines Schlafes in der Fahrgastzelle 4 überwachen zu können, lässt sich die Mutter 1 auf einem Bildschirm 6 Videobilder 7 von dem Kind 3 darstellen. Zusätzlich werden über einen Lautsprecher 8 Geräusche 9 wiedergegeben, die in der Fahrgastzelle 4 aufgenommen sind. Die Videobilder 7 und die Geräusche 9 empfängt ein Computer 10 über eine Internet-Verbindung 11, über die der Computer 10 mit dem Fahrzeug 5 verbunden ist. Bestandteil der Internetverbindung 11 ist eine Funkverbindung 12, über die das Fahrzeug 5 drahtlos mit einer Empfangsstation 13 eines Internet-Service-Anbieters gekoppelt ist. Die Funkverbindung 12 kann auf einer WLAN-Verbindung (WLAN - Wireless Local Area Network), einer GSM-Verbindung (GSM - Global System for Mobile Communications), einer UMTS-Verbindung (UMTS - Universal Mobile Telecommunications System) oder einer vergleichbaren Funkverbindung zum Übertragen insbesondere von Datenpaketen bestehen.

In der Fahrgastzelle 4 befindet sich das schlafende Kind 3 in einem Kindersitz 14. Die Videobilder 7 werden von einer Kamera 15 aufgezeichnet, die auf den Kindersitz 14 gerichtet ist, so dass zumindest das Gesicht 16 des Kindes 3 auf dem Bildschirm stets sichtbar ist. Die Videokamera 15 kann speziell zum Überwachen des Kindes 3 in das Fahrzeug 5 installiert sein. Sie kann aber auch Bestandteil eines anderen Überwachungsgeräts sein. Ein Beispiel dafür ist ein Überwachungsgerät zum Überprüfen der Aufmerksamkeit eines Fahrers des Fahrzeugs 5, mittels welchem ebenfalls Bilder einer Person in einer Fahrgastzelle erzeugbar sind. Die über den Lautsprecher 8 wiedergegebenen Geräusche 9 aus der Fahrgastzelle 4 werden von einem Mikrofon 17 aufgezeichnet. Das Mikrofon 17 kann in den Kindersitz 14 eingebaut sein. Es kann sich bei dem Mikrofon 17 aber auch um ein Mikrofon einer Freisprechanlage einer Telefonanlage oder um ein an einer anderen, für ein Erfassen von Geräuschen in der Fahrgastzelle 4 günstigen Lage angebrachtes Mikrofon handeln.

Die Signale der Videokamera 15 und des Mikrofons 17 werden von einem Steuergerät 18 für eine Übertragung über die Funkstrecke 12 aufbereitet. Das Steuergerät 18 überwacht zusätzlich den Wachzustand des Kindes, indem weitere Signale von dem Steuergerät 18 erfasst und daraufhin überprüft werden, ob das Kind 3 wach ist. Eines der Signale stammt von einer Einheit 19 zum Erfassen einer Sitzbelegung. Die Einheit 19 ist Bestandteil des Kindersitzes 14 und misst sowohl Druck als auch Vibrationen auf einer Sitzfläche des Kindersitzes 14. Zum Überwachen des Kindes 3 ist die Einheit 19 in einen entsprechenden Modus geschaltet, in welchem nicht nur erfasst wird, ob sich ein Kind in den Kindersitz 14 befindet, sondern auch, wie heftig dessen Bewegungen sind. Anhand solcher Bewegungen kann das Steuergerät 18 ermitteln, ob das Kind 3 ruhig schläft oder ob es aufgewacht ist und strampelt. Anstelle der Einheit 19 kann auch eine entsprechende Einheit in einem Fahrzeugsitz des Fahrzeugs 5 genutzt werden. Zum Übertragen von Signalen der Einheit 19 vom Kindersitz 14 zum Steuergerät 18 kann beispielsweise eine entsprechend erweiterte Schnittstelle in einem ISOFIX-Anschluss für Kindersitze integriert sein.

Ein zweites Signal zum Erfassen des Wachzustands des Kindes 3 wird von einem Pulsmessgerät 20 erzeugt, das in diesem Beispiel in einem Gurt 21 des Kindersitzes 14 integriert ist. Ein von dem Pulsmessgerät 20 gemessener Puls des Kindes 3 wird von dem Steuergerät 18 ausgewertet und einem von hier vier Zuständen zugeordnet. Diese vier Zustände sind bezeichnet als: "tief schlafend", "unruhig schlafend", "wach und zufrieden" sowie "wach und unzufrieden" . Die Ergebnisse der Auswertung des Signals der Einheit 19 sowie des Pulsmessgeräts 20 werden von dem Steuergerät 18 über die Funkverbindung 12 an den Computer 10 übertragen. Durch diesen wird auf dem Bildschirm 6 der Mutter 1 der Zustand des Kindes 3 angezeigt. Dabei wird der anhand des Pulses ermittelte Zustand durch ein entsprechendes Symbol auf dem Bildschirm 6 repräsentiert.

Wie heftig sich das Kind 3 bewegt, kann nicht nur mit der Einheit 19 im Kindersitz 14 erfasst werden. Auch eine Alarmanlage 22 des Fahrzeugs 5 kann von dem Steuergerät 18 derart in seiner Betriebsweise verändert werden, dass durch die Alarmanlage 22 Bewegungen des Kindes 3 dahingehend ausgewertet werden, wie heftig diese Bewegungen sind, und entsprechende Signale an der Steuergerät 18 übertragen werden. Die Alarmanlage 22 ist in diesem Modus natürlich auch derart geschaltet, dass sie bei einer Bewegung des Kindes 3 keinen Alarm auslöst. Die Alarmanlage 22 kann die Bewegungen z.B. mit Hilfe von Infrarotsensoren oder z.B. auf Basis von Ultraschall erfassen. Das Fahrzeug 5 kann auch mit Bewegungssensoren ausgestattet sein, deren Signale von dem Steuergerät 18 ebenfalls dazu verwendet werden können, Kinder oder auch Tiere in der Fahrgastzelle 4 zu überwachen.

Zum Aufbauen der Funkverbindung 12 steuert das Steuergerät 18 eine Telefonanlage 23 des Fahrzeugs 5 an. Die Funkverbindung 12 kann auf unterschiedliche Weise zustande kommen.

Zum einen kann die Mutter 1 beim Verlassen des Fahrzeugs 5 das Steuergerät 18 in einen Betriebsmodus schalten, in welchem das Steuergerät 18 die erfassten Daten permanent über die Funkstrecke 12 an den Computer 10 überträgt.

In einem anderen Betriebsmodus des Steuergeräts 18 werden die erfassten Informationen auf Abruf bereitgestellt, d.h. die Mutter 1 muss mittels des Computers 10 ein Übertragen der Informationen auslösen. Die Mutter 1 ruft die Videobilder 7 und das Geräusch 9 somit immer nur dann ab, wenn sie sich über den Wachzustand ihres Kindes 3 bzw. über dessen Wohlergehen informieren möchte.

In einem dritten Modus wird durch das Steuergerät 18 selbständig überwacht, ob das Kind aufgewacht ist. Dazu kann das Steuergerät 18 beispielsweise den mittels des Mikrofons 17 erfassten Geräuschpegel im Inneren der Fahrzeugkabine 4 mit einem Ruhe-Geräuschpegel vergleichen. Dadurch kann erkannt werden, ob das Kind Lautäußerungen von sich gibt, was einen Rückschluss auf dessen Wachzustand oder auch dessen Wohlbefinden ermöglicht. Um Lautäußerungen des Kindes von Geräuschen unterscheiden zu können, die von außen in die Fahrgastzelle 4 eindringen und ebenfalls von dem Mikrofon 17 erfasst werden, weist das Fahrzeug 5 ein weiteres Mikrofon 24 auf, mit dem Geräusche außerhalb des Fahrzeugs direkt erfasst werden können. Das Steuergerät 18 vergleicht die Signale der Mikrofone 17 und 24, wodurch ein im Inneren der Fahrgastzelle 4 erzeugtes Geräusch von einem von außerhalb des Fahrzeugs 5 in die Fahrgastzelle 4 eindringenden Geräusch unterscheidbar ist. Auch die mittels der Einheit 19 und des Pulsmessgeräts 20 erfassten Signale können einem Wachzustand zugeordnet werden so zum Überwachen genutzt werden.

Falls durch das Steuergerät 18 erkannt wird, dass das Kind 3 aufgewacht ist, wird die Funkverbindung 12 dann aufgebaut und die Mutter 1 alarmiert. Bei dem Steuergerät 18 kann auch vorgesehen sein, Verbindungen zu anderen Empfangsgeräten als dem Computer 10 aufzubauen. Beispielsweise kann auch eine Verbindung zu einem Mobiltelefon hergestellt werden, über das dann Signale aus dem Inneren der Fahrgastzelle 4 oder Informationen, die aus Signalen der Sensoren abgeleitet wurden, wiedergegeben bzw. angezeigt werden.

Das Steuergeräts 18 ist des Weiteren in der Lage, neben der Telefonanlage 23 noch andere Geräte des Fahrzeugs 5 zu steuern, über die Einfluss auf das Wohlbefinden des Kindes genommen werden kann. Das Steuergerät 18 ist beispielsweise auch in der Lage, eine Klimaanlage 25 zu aktivieren, wenn eine Temperatur in der Fahrgastzelle 4 für das Kind 3 zu niedrig oder zu hoch wird. Für einen solchen Fall kann auch vorgesehen sein, dass das Steuergerät 18 eine Kommunikationsverbindung zu dem Computer 10 oder zu einem Mobiltelefon der Mutter 1 herstellt. Genauso kann auch ein Sauerstoffgehalt der Luft in der Fahrgastzelle ermittelt werden. Die Temperatur und der Sauerstoffgehalt können auch auf dem Bildschirm 6 angezeigt werden. Generell kann im Zusammenhang mit einem Aufbau einer Kommunikationsverbindung auch vorgesehen sein, dass z.B. für den Fall, dass die Kommunikationsverbindung zu der Mutter 1 nicht hergestellt werden kann, eine weitere Person und auch ein Notruf-Dienst kontaktiert werden.

Im Falle eines Notfalls, wenn durch das Steuergerät 18 erkannt wird, das die Gesundheit des Kindes 3 gefährdet ist, kann auch vorgesehen sein, durch Aktivieren von Warnblinkern oder einer Lichthupe die Aufmerksamkeit von an dem Fahrzeug 5 vorbeigehenden Passanten auf das Fahrzeug 5 zu lenken.

Das Fahrzeug 5 verfügt des Weiteren über einen Empfänger für ein GPS-Signal (GPS - Global Positioning System). Die mit Hilfe dieses Empfängers ermittelten Positionsdaten können ebenfalls Bestandteil der über die Funkverbindung 12 übermittelten Informationen sein. Sie geben als ein Merkmal des Kindes 3 dessen Aufenthaltsort an. Durch ermitteln des Aufenthaltsortes des Kindes 3 ist es möglich, mittels des Computers 10 oder einem anderen Gerät eine Route von einem momentanen Aufenthaltsort der Mutter 1 zu dem Fahrzeug 5 zu berechnen und der Mutter 1 anzuzeigen. Genauso kann der Aufenthaltsort aber an eine weitere Person übermittelt werden, die für den Fall, dass die Mutter 1 nicht erreichbar ist, an deren Stelle über eine Notlage des Kindes 3 informiert wird. Schließlich kann die Position des Fahrzeugs auch zusammen mit einem Notruf an eine Notrufzentrale übermittelt werden.

Es kann auch vorgesehen sein, dass durch das Steuergerät 18 nach Erwachen des Kindes 3 eine Musik oder auch eine Tonaufzeichnung mit der Stimme der Mutter in der Fahrgastzelle 4 abgespielt wird. Auch eine Wiedergabe einer Videoaufzeichnung, also z.B. eines Films, auf einem Bildschirm in der Fahrgastzelle 4 kann dann begonnen werden. Die Funkverbindung 12 zwischen dem Fahrzeug 5 und dem Computer 10 bzw. einem anderen Kommunikationsgerät kann auch bidirektional sein, d. h. es kann auch ermöglicht werden, dass die Stimme der Mutter 1 und auch eine Bildaufzeichnung von ihr zu dem Fahrzeug 5 hin übertragen werden und in der Fahrgastzelle 4 dem Kind 3 präsentiert werden.

Insgesamt wird die Mutter 1 also über die Internetverbindung 11, über Telefon oder über SMS (Short Message Service) über den aktuellen Status des Schlafs des Kindes 3 informiert. Die Alarmanlage 22 des Fahrzeugs ist so parametriert, dass ein Aufwachen des Kindes 3 als Bewegung erkannt wird und an die Mutter 1 gemeldet wird. Über eine Standheizung des Fahrzeugs 5 oder die Klimaanlage 25 wird die Temperatur im Stand des Fahrzeugs 5 auf einem Idealzustand gehalten, bei dem sich ein schlafendes bzw. ein waches Kind wohl fühlt. Bei Bedarf kann auch beruhigende Musik in der Fahrgastzelle 4 abgespielt werden. Die Mutter 1 muss also für den Fall, dass das Kind 3 während der Fahrt eingeschlafen ist, das Kind nicht mehr schlafend vom Fahrzeug 5 in das Haus 2 transportieren. Sie kann abwarten, bis das Kind 3 aufgewacht ist, und es dann aus dem Fahrzeug 5 in das Haus 2 holen.

In Fig. 2 ist eine schematische Darstellung eines parkenden Fahrzeugs 30 gezeigt, in welchem ein Hund 31 zurückgelassen worden ist. Ein Besitzer 32 des Hundes 31 hat das Fahrzeug auf einem Parkplatz eines Supermarkts 33 geparkt und abgeschlossen. Der Besitzer 32 befindet sich in dem Supermarkt 33, um Einkäufe zu erledigen. Mittels eines Mobiltelefons 34 überwacht der Besitzer 32 dabei, wie es dem Hund 31 in dem Fahrzeug 30 geht. Das Mobiltelefon 34 ist dazu in einen Modus geschaltet, der mit einem Babyfon-Modus vergleichbar ist, wie er bei Haus-Telefonanlagen zum Überwachen von schlafenden Babys bereitgestellt wird. Dem Besitzer. 32 werden also über das Mobiltelefon 34 Geräusche aus einer Fahrgastzelle des Fahrzeugs 30 und damit auch Lautäußerungen des Hundes 31 wiedergegeben.

Die Geräusche werden in dem Fahrzeug 30 mittels eines Mikrofons 35 erfasst und von einer Sende- und Empfangseinheit einer Telefonanlage 36 über eine Funkverbindung 37 in ein Funknetz übertragen, von dem in Fig. 2 ein Sendemast 38 dargestellt ist. Auch das Mobiltelefon 34 ist mit dem Funknetz verbunden, so dass entsprechend der Babyfon-Funktion die erfassten Geräusche permanent und nahezu ohne Verzögerung durch das Mobiltelefon 34 wiedergegeben werden. Anstelle einer permanenten Wiedergabe kann auch vorgesehen sein, die Funkverbindung 37 nur dann aufzubauen, wenn durch die Telefonanlage 36 erkannt wird, dass auffallend laute Geräusche im Inneren des Fahrzeugs 30 vorhanden sind. Schließlich kann auch vorgesehen sein, dass der Benutzer 32 mittels des Mobiltelefons 34 die Verbindung zu der Telefonanlage 36 aufbaut und sich somit immer dann die Geräusche wiedergeben lässt, wenn er es wünscht. Die Funkverbindung 37 kann auch bidirektional sein, d. h. die Stimme des Besitzers 32 kann über das Mobiltelefon 34 an die Telefonanlage 36 übertragen und im Inneren des Fahrzeugs 30 wiedergegeben werden. Natürlich ist auch denkbar, dass nicht nur Tonsignale, sondern auch Bild- oder Videosignale von dem Fahrzeug 30 weg oder hin zum Fahrzeug 30 übertragen werden.

Neben der Telefonanlage 36 wird auch eine in Fig. 2 nicht weiter dargestellte Klimaeinheit des Fahrzeugs 30 aktiviert, bei der Steuerparameter derart gesetzt werden, dass ein Erfrieren, ein Hitzschlag oder ein Verdursten des Hundes 31 oder eines anderen Lebewesens vermieden wird. In dem in Fig. 2 gezeigten Beispiel wurde durch die Klimaeinheit ein Rollo 40 heruntergefahren, weil durch die Klimaeinheit erkannt worden ist, dass eine Sonneneinstrahlung in die Fahrgastzelle des Fahrzeugs 30 verhältnismäßig hoch war. Für den Fall, dass die Temperatur im Inneren der Fahrgastzelle über einen kritischen Wert steigt, kann durch das Steuergerät auch ein Schiebedach des Fahrzeugs 30 geöffnet werden, um die Fahrgastzelle zu lüften. Außerdem kann die Zentralverriegelung des Fahrzeugs 30 in einem solchen Notfall entriegelt werden, so dass Personen von außen den Hund 31 befreien können.

Zum Aktivieren der eben beschriebenen Überwachung des Hundes 31 in der Fahrgastzelle des Fahrzeugs 30 musste der Besitzer 32 beim Verlassen des Fahrzeug 30 lediglich ein einzelnes Bedienelement 39 des Fahrzeugs 30 betätigen. Dadurch wird ein in Fig. 2 nicht weiter dargestelltes Steuergerät des Fahrzeugs 30 aktiviert, durch das wiederum mehrere weitere Komponenten des Fahrzeugs 30 in einen Zustand geschaltet werden, in welchem eine Überwachung und ein Schutz eines in dem Fahrzeug verbliebenen Lebewesens ermöglicht ist. Indem alle Überwachungs- und Schutzfunktionen durch das Bedienelement 39 gemeinsam aktivierbar sind, muss der Besitzer 32 beim Verlassen des Fahrzeugs 30 nicht daran denken, welche Komponenten im einzelnen zu aktivieren sind. So wird vermieden, dass der Besitzer 32 beim Aussteigen das Aktivieren einer der Komponenten vergisst. Es ist somit durch einfaches Betätigen des Bedienelements 39 stets sichergestellt, dass der im Fahrzeug 30 zurückgelassene Hund 31 sicher ist und mittels des Mobiltelefons 34 überwacht werden kann.

Anstelle einer Aktivierung der Überwachung über das Bedienelement 39 kann auch vorgesehen sein, die Überwachung automatisch zu aktivieren. Dies kann z.B. dadurch geschehen, dass bei einem Fahrzeug, nachdem es abgestellt wurde, mittels eines Sensors überprüft wird, ob sich noch ein Lebewesen in dem Fahrzeug befindet. Ist dies der Fall, kann die Überwachung dann aktiviert werden. Eine Aktivierung von außerhalb des Fahrzeuges ist ebenfalls möglich (z.B. per Computer, Handy, etc.).

Der Besitzer 32 muss den Hund 31 nicht mit in den Supermarkt 33 mitnehmen. Er kann ihn für die Dauer des Einkaufs einfach im Fahrzeug 30 zurücklassen, ohne Sorge haben zu müssen, dass dadurch das Wohlbefinden des Tieres gefährdet ist. Das Tier ist automatisch vor dem einfallenden Sonnenlicht durch Verfahren des Rollos 40 geschützt worden. Zudem ist es dem Besitzer 32 jederzeit möglich, die Lage des Hundes 31 zu überblicken und bei Bedarf dem Tier zu Hilfe zu kommen.

Durch die Beispiele ist gezeigt, wie es mittels der Erfindung möglich wird, ein Kind oder ein Tier in einem abgestellten Fahrzeug zurückzulassen und dabei sicherzustellen, dass zum einen der Komfort bzw. die Sicherheit des Lebewesens überwacht werden und zum anderen einer Person von außerhalb des Fahrzeugs ein Einblick in das Fahrzeugs ermöglicht wird.

## Patentansprüche

1. Verfahren zum Betreiben eines Fahrzeugs (5, 30), in dem nach einem Abstellen mindestens ein Lebewesen (3, 31) verblieben ist, mit den Schritten:
a) Erfassen mindestens einer Größe in dem Fahrzeug (5, 30) mittels einer Erfassungseinrichtung (15, 17, 19, 20, 22, 35), wobei die Größe mit mindestens einem Merkmal (16) des mindestens einen Lebewesens (3, 31) korreliert ist; und
b) Ausführen mindestens einer Aktion in Abhängigkeit von der erfassten Größe, wobei
der Schritt b) des Ausführens mindestens einer Aktion die folgenden Schritte umfasst:
b1) Verarbeiten der mindestens einen erfassten Größe zum Übertragen einer Repräsentation des mindestens einen Merkmals außerhalb des Fahrzeugs; und
b2) Bereitstellen der Repräsentation an eine Person außerhalb des Fahrzeugs,
**dadurch gekennzeichnet, dass**
der Schritt b2) des Bereitstellens der Repräsentation (7, 9) die folgenden Schritte umfasst:
b2.1) Aufbauen einer Kommunikationsverbindung (12, 37) mit einer Sende- und Empfangseinheit (23, 36) des Fahrzeugs von außerhalb des Fahrzeugs und
b2.2) Übertragen der Repräsentation (7, 9) über die Kommunikationsverbindung (12, 37), wobei
eine bidirektionale Kommunikationsverbindung (12, 37) aufgebaut wird und ein Bild- oder Tonsignal von der Person außerhalb des Fahrzeugs hin zu dem Fahrzeug übertragen und in der Fahrgastzelle wiedergegeben wird.

2. Verfahren nach Anspruch 1,
**dadurch gekennzeichnet, dass**
als Größe ein Bildsignal einer Kamera (15) erfasst wird, durch welche mindestens ein Bild (7) von dem Lebewesen (3) bereitgestellt wird.

3. Verfahren nach Anspruch 1 oder 2,
**dadurch gekennzeichnet, dass**
als Größe ein Audiosignal (9) aus dem Fahrzeug (5, 30), insbesondere aus einem Bereich einer Rückbank, erfasst wird.

4. Verfahren nach einem der vorhergehenden Ansprüche,
**dadurch gekennzeichnet, dass**
als Größe ein Signal eines Geräts zum Überwachen einer Körperfunktion des mindestens Lebewesens, insbesondere eines Pulses (20) des mindestens einen Lebewesens, erfasst wird.

5. Verfahren nach einem der vorhergehenden Ansprüche,
**dadurch gekennzeichnet**, das
als Größe ein Signal eines Temperatursensors erfasst wird, der eine Temperatur in dem Fahrzeug erfasst.

6. Verfahren nach einem der vorhergehenden Ansprüche,
**dadurch gekennzeichnet, dass**
als Größe ein Signal einer Einrichtung (19) zum Erkennen, ob ein Fahrzeugsitz besetzt ist, erfasst wird.

7. Verfahren nach einem der vorhergehenden Ansprüche,
**dadurch gekennzeichnet, dass**
die mindestens eine Größe mittels einer Alarmanlage (22) und/oder einer Crashsensorik erfasst wird, durch welche das Innere des Fahrzeugs (5, 30) überwachbar ist.

8. Verfahren nach einem der vorhergehenden Ansprüche,
**dadurch gekennzeichnet, dass**
als mindestens eine Aktion überprüft wird, ob die erfasste Größe in einem Sollbereich liegt, und, falls die erfasste Größe außerhalb des Sollbereichs liegt, eine Videoaufzeichnung dargestellt und/oder Audiosignal abgespielt und/oder eine Sitzmassage aktiviert und/oder eine Kommunikationsverbindung (12, 37) zu einem Gerät (10, 34) außerhalb des Fahrzeugs aufgebaut und/oder ein Schiebedach geöffnet und/oder ein Rollo (40) verfahren und/oder eine Klimatisierung (25) aktiviert und/oder eine Zentralverriegelung entriegelt und/oder ein von außerhalb des Fahrzeugs wahrnehmbares Warnsignal erzeugt wird.

9. Verfahren nach einem der vorhergehenden Ansprüche,
**dadurch gekennzeichnet, dass**
bei dem Schritt b1) ein Grad einer Bewegung des Lebewesens ermittelt wird und das mindestens eine Merkmal durch den ermittelten Grad repräsentiert wird.

10. Verfahren nach einem der vorhergehenden Ansprüche,
**dadurch gekennzeichnet, dass**
bei dem Schritt b1) die erfasste Größe einem Zustand, insbesondere einem Schlaf- oder Wachzustand oder einen Grad eines Wohlbefindens, zugeordnet wird und das mindestens eine Merkmal durch ein Ergebnis der Zuordnung repräsentiert wird.

11. Verfahren nach einem der vorhergehenden Ansprüche,
**dadurch gekennzeichnet, dass**
bei dem Schritt b2) die Repräsentation (7, 9) akustisch (8) und/oder optisch (6) wiedergegeben wird.

12. Verfahren nach einem der vorhergehenden Ansprüche,
**dadurch gekennzeichnet, dass**
der Schritt b2) des Bereitstellens der Repräsentation (7, 9) die folgenden Schritte umfasst:
b2.1) Überprüfen, ob die Repräsentation (7, 9) ein vorbestimmtes Kriterium erfüllt, und,
b2.2) falls die Repräsentation (7, 9) das vorbestimmtes Kriterium erfüllt, Aufbauen einer Kommunikationsverbindung (12, 37) mit einem Empfangsgerät (10, 34) eines Benutzers (1, 32) vom Fahrzeug aus und Übertragen der erfassten Größe (7, 9) und/oder der Repräsentation (7, 9) über die Kommunikationsverbindung (12, 37).

13. Fahrzeug (5, 30)
mit einer Erfassungseinrichtung (15, 17, 19, 20, 22, 35) zum Erfassen mindestens einer Größe (7, 9) in dem Fahrzeug (5, 30) und mit Mitteln (22, 23, 25) zum Ausführen mindestens einer Aktion, wobei
die Erfassungseinrichtung und die Mittel zum Ausführen in einem abgestellten Zustand des Fahrzeugs (5, 30) betreibbar sind,
die mindestens eine Größe (7, 9) bei einem in dem Fahrzeug (5, 30) befindlichen Lebewesen (3, 31) mit mindestens einem Merkmal des Lebewesens (3, 312) korreliert ist, und
die Mittel zum Ausführen dazu ausgelegt sind, die mindestens eine Aktion in Abhängigkeit von der erfassten Größe (15, 17, 19, 20, 22) auszuführen und hierbei die Aktion die folgenden Schritte umfasst:.
b1) Verarbeiten der mindestens einen erfassten Größe zum Übertragen einer Repräsentation des mindestens einen Merkmals zu einem Gerät außerhalb des Fahrzeugs hin; und
b2) Bereitstellen der Repräsentation an eine Person außerhalb des Fahrzeugs;
**dadurch gekennzeichnet, dass**
der Schritt b2) des Bereitstellens der Repräsentation (7, 9) die folgenden Schritte umfasst:
b2.1) Ermöglichen eines Aufbaus einer Kommunikationsverbindung (12, 37) zu einer Sende- und Empfangseinheit (23, 36) des Fahrzeugs von dem Gerät außerhalb des Fahrzeugs aus; und
b2.2) Übertragen der Repräsentation (7, 9) über die Kommunikationsverbindung (12, 37); wobei
die Kommunikationsverbindung (12, 37) bidirektional ist und ein Bild- oder Tonsignal von der Person außerhalb des Fahrzeugs hin zu dem Fahrzeug übertragbar und in der Fahrgastzelle wiedergebbar ist.

## Claims

1. Method for operating a vehicle (5, 30) in which at least one living being (3, 31) remains following parking, comprising the steps of:
a) detecting at least one variable in the vehicle (5, 30) by means of a detection apparatus (15, 17, 19, 20, 22, 35), the variable being correlated with at least one property (16) of the at least one living being (3, 31); and
b) carrying out at least one action on the basis of the detected variable, the step b) of carrying out at least one action comprising the following steps:
b1) processing the at least one detected variable in order to transmit, outside the vehicle, a representation of the at least one property; and
b2) providing a person outside the vehicle with the representation,
**characterised in that**,
the step b2) of providing the representation (7, 9) comprises the following steps:
b2.1) establishing a communication connection (12, 37) to a transceiver unit (23, 36) of the vehicle from outside the vehicle and
b2.2) transmitting the representation (7, 9) via the communication connection (12, 37),
a bi-directional communication connection (12, 37) being established and an image or sound signal being transmitted by the person outside the vehicle to the vehicle and being reproduced in the passenger compartment.

2. Method according to claim 1,
**characterised in that**
an image signal of a camera (15) is detected as a variable, by means of which camera at least one image (7) of the living being (3) is provided.

3. Method according to either claim 1 or claim 2,
**characterised in that**
an audio signal (9) from the vehicle (5, 30), in particular from a region of a back seat, is detected as a variable.

4. Method according to any of the preceding claims,
**characterised in that**
a signal of a device for monitoring a bodily function of the at least one living being, in particular a pulse (20) of the at least one living being, is detected as a variable.

5. Method according to any of the preceding claims,
**characterised in that**
a signal of a temperature sensor is detected as a variable, which sensor detects a temperature in the vehicle.

6. Method according to any of the preceding claims,
**characterised in that**
a signal of an apparatus (19) for identifying whether a vehicle seat is occupied is detected as a variable.

7. Method according to any of the preceding claims,
**characterised in that**
the at least one variable is detected by means of an alarm system (22) and/or a crash sensor system, by means of which the interior of the vehicle (5, 30) can be monitored.

8. Method according to any of the preceding claims,
**characterised in that**,
as at least one action, a check is carried out as to whether the detected variable is within a desired range, and if the detected variable is outside the desired range, a video recording is shown and/or an audio signal is played and/or a seat massage is activated and/or a communication connection (12, 37) to a device (10, 34) outside the vehicle is established and/or a sunroof is opened and/or a blind (40) is moved and/or an air conditioning system (25) is activated and/or a central locking system is unlocked and/or a warning signal perceivable outside the vehicle is generated.

9. Method according to any of the preceding claims,
**characterised in that**,
in step b1), a degree of movement of the living being is determined and the at least one property is represented by the determined degree.

10. Method according to any of the preceding claims,
**characterised in that**,
in step b1), the detected variable is associated with a state, in particular a sleep state or waking state or a degree of wellbeing, and the at least one property is represented by a result of the association.

11. Method according to any of the preceding claims,
**characterised in that**,
in step b2), the representation (7, 9) is reproduced acoustically (8) and/or visually (6).

12. Method according to any of the preceding claims,
**characterised in that**,
the step b2) of providing the representation (7, 9) comprises the following steps:
b2.1) checking whether the representation (7, 9) fulfils a predetermined criterion, and
b2.2) if the representation (7, 9) fulfils the predetermined criterion, establishing a communication connection (12, 37) from the vehicle to a receiving device (10, 34) of a user (1, 32), and transmitting the detected variable (7, 9) and/or the representation (7, 9) via the communication connection (12, 37).

13. Vehicle (5, 30)
comprising a detection apparatus (15, 17, 19, 20, 22, 35) for detecting at least one variable (7, 9) in the vehicle (5, 30) and means (22, 23, 25) for carrying out at least one action,
the detection apparatus and the means for carrying out being operable when the vehicle (5, 30) is parked,
the at least one variable (7, 9) being correlated with at least one property of the living being (3, 31) when a living being (3, 31) is inside the vehicle (5, 30), and the means for carrying out being designed to carry out the at least one action on the basis of the detected variable (15, 17, 19, 20, 22), and in this case the action comprising the following steps:
b1) processing the at least one detected variable in order to transmit a representation of the at least one property to a device outside the vehicle; and
b2) providing a person outside the vehicle with the representation,
**characterised in that**
the step b2) of providing the representation (7, 9) comprises the following steps:
b2.1) allowing a communication connection (12, 37) to a transceiver unit (23, 36) of the vehicle to be established by the device outside the vehicle; and
b2.2) transmitting the representation (7, 9) via the communication connection (12, 37),
the communication connection (12, 37) being bi-directional and an image or sound signal being transmittable to the vehicle by the person outside the vehicle and reproducible in the passenger compartment.

## Revendications

1. Procédé de fonctionnement d'un véhicule (5, 30), dans lequel, après un arrêt, il reste au moins un être vivant (3, 31), comprenant les étapes consistant à :
a) saisir au moins une grandeur dans le véhicule (5, 30) au moyen d'un dispositif de saisie (15, 17, 19, 20, 22, 35), dans lequel la grandeur est en corrélation avec au moins une caractéristique (16) du au moins un être vivant (3, 31) ; et
b) effectuer au moins une action en fonction de la grandeur saisie, dans lequel l'étape b) de la réalisation d'au moins d'une action comprend les étapes consistant à :
b1) traiter la au moins une grandeur saisie pour transférer une représentation de la au moins une caractéristique à l'extérieur du véhicule ; et
b2) former la représentation à une personne à l'extérieur du véhicule,
**caractérisé en ce que** :
l'étape b2) de la formation de la représentation (7, 9) comprend les étapes suivantes :
b2.1 l'élaboration d'une liaison de communication (12, 37) avec une unité émettrice et réceptrice (23, 36) du véhicule de l'extérieur du véhicule et
b2.2 le transfert de la représentation (7, 9) via la liaison de communication (12, 37), dans lequel :
une liaison de communication bidirectionnelle (12, 37) est élaborée et un signal vidéo ou audio est transféré au véhicule par la personne à l'extérieur du véhicule et reproduit dans le compartiment passagers.

2. Procédé selon la revendication 1,
**caractérisé en ce que** :
l'on saisit comme grandeur un signal vidéo d'une caméra (15), par laquelle au moins une image (7) de l'être vivant (3) est formée.

3. Procédé selon la revendication 1 ou la revendication 2,
**caractérisé en ce que** :
l'on saisit comme grandeur un signal audio (9) tiré du véhicule (5, 30), en particulier d'une zone d'une banquette arrière.

4. Procédé selon l'une quelconque des revendications précédentes,
**caractérisé en ce que** :
l'on saisit comme grandeur un signal d'un appareil permettant de surveiller une fonction corporelle du au moins un être vivant, en particulier d'un pouls (20) du au moins un être vivant.

5. Procédé selon l'une quelconque des revendications précédentes,
**caractérisé en ce que** :
l'on saisit comme grandeur un signal d'un capteur de température qui saisit une température dans le véhicule.

6. Procédé selon l'une quelconque des revendications précédentes,
**caractérisé en ce que** :
l'on saisit comme grandeur un signal d'un dispositif (19) pour observer si un siège du véhicule est occupé.

7. Procédé selon l'une quelconque des revendications précédentes,
**caractérisé en ce que** :
la au moins une grandeur est saisie au moyen d'une installation d'avertissement (22) et/ou d'un capteur de choc par laquelle ou lequel l'intérieur du véhicule (5, 30) peut être surveillé.

8. Procédé selon l'une quelconque des revendications précédentes,
**caractérisé en ce que** :
comme au moins une action, on vérifie si la grandeur saisie se trouve dans une zone théorique et, dans le cas où la grandeur saisie se trouve en dehors de la zone théorique, un enregistrement vidéo est formé et/ou un signal audio est émis et/ou un massage de siège est activé et/ou une liaison de communication (12, 37) est élaborée avec un appareil (10, 34) en dehors du véhicule et/ou un toit ouvrant est ouvert et/ou un store (40) est déployé et/ou une climatisation (25) est activée et/ou un verrouillage central est déverrouillé et/ou un signal d'avertissement perceptible en dehors du véhicule est produit.

9. Procédé selon l'une quelconque des revendications précédentes,
**caractérisé en ce que** :
à l'étape b1), on détecte un degré d'un mouvement de l'être vivant et la au moins une caractéristique est représentée par le degré détecté.

10. Procédé selon l'une quelconque des revendications précédentes,
**caractérisé en ce que** :
à l'étape b1), la grandeur saisie est affectée à un état, en particulier un état de sommeil ou de veille ou encore à un degré d'un bien-être et la au moins une caractéristique est représentée par un résultat de l'affectation.

11. Procédé selon l'une quelconque des revendications précédentes,
**caractérisé en ce que** :
à l'étape b2), on reproduit la représentation (7, 9) en mode acoustique (8) et/ou en mode optique (6).

12. Procédé selon l'une quelconque des revendications précédentes,
**caractérisé en ce que** :
l'étape b2) de la formation de la représentation (7, 9) comprend les étapes consistant à :
b2.1) vérifier si la représentation (7, 9) remplit un critère prédéterminé et,
b2.2 au cas où la représentation (7, 9) remplit le critère prédéterminé, élaborer une liaison de communication (12, 37) avec un appareil récepteur (10, 34) d'un utilisateur (1, 32) du véhicule vers l'extérieur et transférer la grandeur saisie (7, 9) et/ou la représentation (7, 9) via la liaison de communication (12, 37).

13. Véhicule (5, 30) comprenant :
un dispositif de saisie (15, 17, 19, 20, 22, 35) pour saisir au moins une grandeur (7, 9) dans le véhicule (5 30) et des moyens (22, 23, 25) pour effectuer au moins une action, dans lequel :
le dispositif de saisie et les moyens de réalisation sont exploitables dans un état à l'arrêt du véhicule (5, 30) et
la au moins une grandeur (7, 9) est en corrélation, chez au moins un être vivant (3, 31) se trouvant dans le véhicule (3, 31), avec au moins une caractéristique de l'être vivant (3, 31) et
les moyens de réalisation sont conçus pour effectuer au moins une action en fonction de la grandeur saisie (15, 17, 19, 20, 22) et l'action comprend en l'occurrence les étapes suivantes :
b1) le traitement de la au moins une grandeur saisie pour transférer une représentation de la au moins une caractéristique à un appareil en dehors du véhicule ; et
b2) la formation de la représentation auprès d'une personne en dehors du véhicule ;
caractérisé en ce qui :
l'étape b2) de la formation de la représentation (7, 9) comprend les étapes consistant à :
b2.1 permettre une élaboration d'une liaison de communication (12, 37) avec une unité émettrice et réceptrice (23, 36) du véhicule depuis l'appareil à l'extérieur du véhicule ; et
b2.2 transférer la représentation (7, 9) via la liaison de communication (12, 37) ; dans lequel :
la liaison de communication (12, 37) est bidirectionnelle et un signal vidéo ou audio peut être transféré au véhicule par la personne à l'extérieur du véhicule et reproduit dans le compartiment passagers.
